# EUROPEAN PATENT SPECIFICATION

(11) **EP 0 605 058 B1**
(45) Date of publication and mention of the grant of the patent: **08.07.1998**
(21) Application number: 93203701.3
(22) Date of filing: 27.12.1993
(51) Int. Cl.: G02B 26/02

(54) **Apparatus for amplitude modulation of laser light**
Vorrichtung zur Amplitudenmodulation von Laserlicht
Dispositif pour la modulation d'amplitude d'une lumière laser

(30) Priority: 31.12.1992 US 999075
(43) Date of publication of application: 06.07.1994
(73) Proprietor: Philips Electronics N.V., 5621 BA Eindhoven (NL)
(72) Inventor: Kaylor, William Robert, NL-5656 AA Eindhoven (NL); Boardman, Allen, NL-5656 AA Eindhoven (NL)
(74) Representative: Cobben, Louis Marie Hubert

(56) References cited:
- US-A- 3 499 699
- US-A- 3 562 498
- PRODUCT ENGINEERING, vol.40, no.20, 6 October 1969, NEW YORK US pages 83 - 84 'RUGGED LASER MEASURES NMICROINCHES IN THE SHOP'

## Description

The subject invention relates to an apparatus for amplitude modulation of a laser beam with transmission signal information comprising :
a laser (10) for providing a laser light beam (12);
a beam splitter (14) for splitting said laser beam into a first light beam (16) and a second light beam (18);
a signal source for providing information signals (I) to be transmitted by said laser beam;
a mirror assembly (20) arranged in the path (C) of said second light beam and coupled to a block of piezoelectric material (24) for displacing said mirror assembly, thereby varying the length of said second light beam path (C);
electronic means (32) having an input coupled to said signal source and an output coupled to said block of piezo-electric material such that the length of said second light path is varied in accordance with the information signal;
a beam combiner (14) for recombining said first and second light beams at the ends of the first light beam path (A) and the second light beam path (C) whereby the varying of the length of the second light path results in an amplitude modulation of the combined laser beam (22).

US.Pat.3.499.699 discloses a wide band light modulator comprising a laser source and a beam splitter for splitting the beam from the laser source into a first light beam and a second light beam. In the path of each of these beams a first, low frequency, modulator formed by a movable reflector and a second, high frequency, modulator in the form of an electro-optic cell are present. After the first and second beam have been reflected by their respective reflector they are recombined by the beam splitter. The amplitude of the combined beam is determined by the optical path length variation for both beams introduced by their respective reflector and electro-optic cell.

The object of the present invention is to provide a light modulating apparatus having a simpler construction and showing a high degree of linearity and stability. This apparatus is characterized in that, in order to compensate for thermal expansion of said block of piezoelectric material (24), said block is attached to the center of a floating intermediate plane (26), the opposite ends of said plane being attached to a fixed reference plane (27) at both sides of said first block via two further blocks of piezoelectric material (26,28) having substantially the same size and mass as said first block.

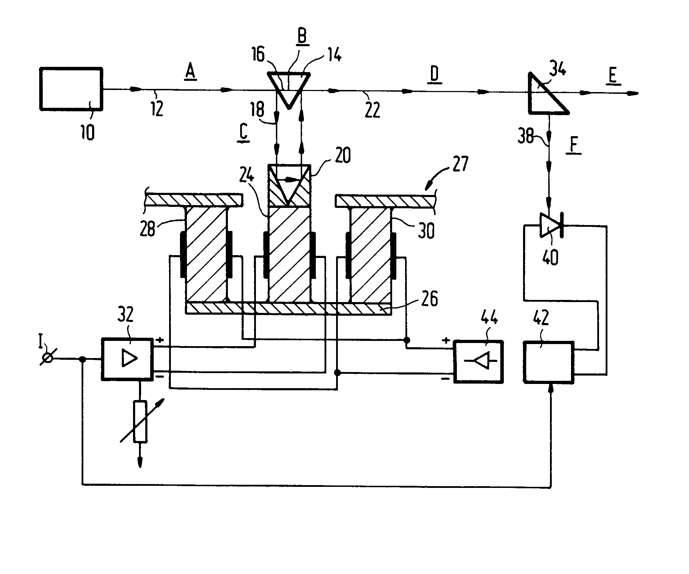

With the above and additional objects and advantages in mind as will hereinafter appear, the invention will be described with reference to the accompanying drawing, in which the sole Figure shows a block schematic diagram of the invention.

As shown in the Figure, a laser light source 10 generates a laser light beam 12 which is directed along light path A. A beam splitter 14 splits the laser light beam 12 into a first light beam 16, which travels horizontally through the beam splitter 14 along a light path B, and a second light beam 18, which travels vertically downward away from the beam splitter 14 along a light path C. In order to achieve maximum modulation, it is preferable that the first and second light beams 16 and 18 have the same intensity. Light path C includes a mirror arrangement 20 which reflects the second light beam 18 back to the beam splitter 14 where it is recombined with the first light beam 16. The resultant laser light beam 22 then travels along light path D.

In order to vary the length of the light path C, the mirror arrangement 20 is mounted to an end of an actuator in the form of a block 24 of piezoelectric material, the opposite end thereof being mounted in the center of a intermediate base plane 26. The opposite ends of the intermediate base plane 26 are then attached to a fixed reference plane 27 by two blocks 28 and 30 of piezoelectric material. The three blocks 24, 28 and 30 are the same size and have equal mass.

An information signal source (not shown) provides information signals I for modulating the laser light beam. These signals, which may be analog or digital, are applied through a wide band amplifier 32 to the block 24 resulting in the length thereof being varied through electrostrictive motion. It is important that the electrostrictive motion of block 24 be limited to no more than 1/2 the wavelength of the laser light.

The blocks 28 and 30 are provided to compensate for any thermal expansion of block 24 and to provide electrostrictive "fine tuning" of the length of the light path C. To this end, the recombined laser light beam 22 in the light path D is applied to a second beam splitter 34 forming a third light beam 36 which travels along light path E, and a fourth light beam 38 which travels vertically along light path F. This fourth light beam 38 is applied to an optical detector 40 which is coupled to a sample gate and correction control circuit 42. The electrical energy derived from the optical detector 40 is sampled only during those times when an information signal is not present. Hence, the sample gate and correction control circuit 42 has the input information signal applied thereto as a control signal. The sample gate and correction control circuit 42 includes a memory for storing a previous sample and if the present sample is substantially different from the stored sample, indicative of thermal expansion of the block 24, a D.C. correction voltage is applied, through sample-and-hold circuit 44, to the blocks 28 and 30. This same procedure is also used to electrostrictively fine tune the quiescent length light path C by adjusting for maximum signal output or null, whichever is desired.

## Claims

1. An apparatus for amplitude modulating a laser beam with transmission signal information comprising :
a laser (10) for providing a laser light beam (12);
a beam splitter (14) for splitting said laser beam into a first light beam (16) and a second light beam (18);
a signal source for providing information signals (I) to be transmitted by said laser beam;
a mirror assembly (20) arranged in the path (C) of said second light beam and coupled to a block of piezoelectric material (24) for displacing said mirror assembly, thereby varying the length of said second light beam path (C);
electronic means (32) having an input coupled to said signal source and an output coupled to said block of piezo-electric material such that the length of said second light path is varied in accordance with the information signal;
a beam combiner (14) for recombining said first and second light beams at the ends of the first light beam path (A) and the second light beam path (C) whereby the varying of the length of the second light path results in an amplitude modulation of the combined laser beam (22), characterized in that, in order to compensate for thermal expansion of said block of piezoelectric material (24), said block is attached to the center of a floating intermediate plane (26), the opposite ends of said plane being attached to a fixed reference plane (27) at both sides of said first block via two further blocks of piezoelectric material (26,28) having substantially the same size and mass as said first block.

2. An apparatus as claimed in claim 1, characterized in that, for fine tuning of said second light path, it comprises:
a second beam splitter (34) for splitting the amplitude modulated laser beam (22) into a third outgoing light beam and a fourth light beam (38);
an optical detector (40) for detecting the fourth light beam; and
an electronic correction circuit (42,44) receiving the output from said optical detector and generating a correction signal for said further blocks (28,30) in response to a difference between said output and a previously stored signal.

3. An apparatus as claimed in claim 2, characterized in that the correction circuit is only operative when said information signals (I) are not present.

4. An apparatus as claimed in claim 1 or 2, characterized in that said first light beam and said second light beam (18) are of equal intensity.

## Patentansprüche

1. Vorrichtung zur Amplitudenmodulation eines Laserstrahls mit Übertragungssignalinformation, mit:
einem Laser (10) zum Erzeugen eines Laserlichtstrahls (12);
einem Strahlspalter (14) zum Spalten des genannten Laserstrahls in einen ersten Lichtstrahl (16) und einen zweiten Lichtstrahl (18);
einer Signalquelle zum Liefern von Informationssignalen (I), die von dem genannten Laserstrahl übertragen werden sollen;
einer Spiegeleinheit (20), vorgesehen in der Strecke (C) des genannten zweiten Lichtstrahls und gekoppelt mit einem Block aus piezoelektrischem Material (24) zum Verlagern der Spiegeleinheit, wodurch die Länge der Strecke des genannten zweiten Lichtstrahls (C) variiert wird;
elektronischen Mitteln (32), deren Eingang mit der genannten Signalquelle gekoppelt ist und deren Ausgang derart mit dem genannten piezoelektrischen Materialblock gekoppelt ist, daß die Länge der genannten zweiten Lichtstrecke entsprechend dem Informationssignal variiert wird;
einer Strahlkombinierstufe (14) zum Kombinieren des genannten ersten und zweiten Lichtstrahls an dem Ende der ersten Lichtstrahlstrecke (A) und der zweiten Lichtstrahlstrecke (C), wodurch das Variieren der Länge der zweiten Lichtstrahlstrecke zu einer Amplitudenmodulation des kombinierten Laserstrahls (22) führt, dadurch gekennzeichnet, daß zum Ausgleichen thermischer Ausdehnung des genannten thermoelektrischen Blocks (24) dieser Block in der Mitte einer schwebenden Zwischenplatte (26) befestigt ist, wobei die einander gegenüberliegenden Enden dieser ebenen Platte auf beiden Seiten des genannten ersten Blocks über zwei weitere Blöcke aus piezoelektrischem Material (26, 28) nahezu derselben Größe und derselben Masse wie der erste Block, an einer festen ebenen Bezugsplatte (27) befestigt ist.

2. Vorrichtung nach Anspruch 1, dadurch gekennzeichnet, daß sie zur Feinabstimmung der genannten zweiten Lichtstrecke die folgenden Elemente aufweist:
einen zweiten Strahlspalter (34) zum Spalten des amplitudenmodulierten Laserstrahls (22) in einen dritten Lichtstrahl und einen vierten Lichtstrahl (38);
einen optischen Detektor (40) zum Detektieren des vierten Lichtstrahls; und
eine elektronische Korrekturschaltung (42, 44), die das Ausgangssignal des genannten optischen Detektors erhält und in Antwort auf eine Differenz zwischen dem genannten Ausgangssignal und einem vorher gespeicherten Signal ein Korrektursignal für die genannten weiteren Blöcke (28, 30) erzeugt.

3. Vorrichtung nach Anspruch 2, dadurch gekennzeichnet, daß die Korrekturschaltung nur dann wirksam ist, wenn die genannten Informationssignale (I) nicht vorhanden sind.

4. Vorrichtung nach Anspruch 1 oder 2, dadurch gekennzeichnet, daß der genannte erste Lichtstrahl und der genannte zweite Lichtstrahl (18) dieselbe Intensität haben.

## Revendications

1. Dispositif pour la modulation d'amplitude d'un faisceau laser avec informations d'un signal de transmission comprenant :
un laser (10) pour fournir un faisceau de lumière laser (12);
un séparateur de faisceau (14) pour séparer ledit faisceau laser en un premier faisceau lumineux (16) et un deuxième faisceau lumineux (18);
une source de signaux pour fournir des signaux d'information (I) à transmettre par ledit faisceau laser;
un système réflecteur (20) disposé dans le trajet (C) dudit deuxième faisceau lumineux et couplé à un bloc de matériau piézo-électrique (24) pour déplacer ledit système réflecteur, faisant varier de la sorte la longueur du trajet (C) dudit deuxième faisceau lumineux;
un dispositif électrique (32) présentant une entrée couplée à ladite source de signaux et une sortie couplée au bloc de matériau piézo-électrique de telle sorte que la longueur dudit deuxième trajet de la lumière est modifiée suivant le signal d'information;
un combinateur de faisceaux (14) pour recombiner lesdits premier et deuxième faisceaux lumineux aux extrémités du trajet (A) du premier faisceau lumineux et du trajet (C) du deuxième faisceau lumineux, la variation de la longueur du deuxième trajet de la lumière conduisant à une modulation d'amplitude du faisceau laser combiné (22), caractérisé en ce que, afin de compenser la dilatation thermique dudit bloc de matériau piézo-électrique (24), ledit bloc est connecté au centre d'un plan flottant intermédiaire (26), les extrémités opposées dudit plan étant reliées à un plan de référence fixe (27) des deux côtés dudit premier bloc par le biais de deux blocs de matériau piézo-électrique supplémentaires (26, 28) ayant sensiblement la même taille et la même masse que ledit premier bloc.

2. Dispositif suivant la revendication 1, caractérisé en ce que, pour le réglage fin dudit deuxième trajet de la lumière, il comprend :
un deuxième séparateur de faisceau (34) pour séparer le faisceau laser à amplitude modulée (22) en un troisième faisceau lumineux de sortie et un quatrième faisceau lumineux (38);
un détecteur optique (40) pour détecter le quatrième faisceau lumineux, et
un circuit de correction électronique (42, 44) recevant la sortie du détecteur optique et produisant un signal de correction pour lesdits blocs supplémentaires (28, 30) en réponse à une différence entre cette sortie et un signal préalablement enregistré.

3. Dispositif suivant la revendication 2, caractérisé en ce que le circuit de correction fonctionne uniquement lorsque lesdits signaux d'information (I) ne sont pas présents.

4. Dispositif suivant la revendication 1 ou 2, caractérisé en ce que ledit premier faisceau lumineux et ledit deuxième faisceau lumineux (18) sont d'égale intensité.
